# EUROPEAN PATENT SPECIFICATION

(11) **EP 1 511 390 B1**
(45) Date of publication and mention of the grant of the patent: **11.03.2009**
(21) Application number: 03736372.8
(22) Date of filing: 26.05.2003
(51) Int. Cl.: A23B 4/06

(54) **METHOD AND APPARATUS FOR COOLING CARCASSES AND CARCASS PARTS OF SLAUGHTERED ANIMALS**
VERFAHREN UND VORRICHTUNG ZUM KÜHLEN VON SCHLACHTTIEREN UND SCHLACHTTIERKÖRPERTEILEN
PROCEDE ET APPAREIL SERVANT A REFROIDIR LES CARCASSES ET DES PARTIES DE CARCASSES D'ANIMAUX ABATTUS

(30) Priority: 29.05.2002 NL 1020710
(43) Date of publication of application: 09.03.2005
(73) Proprietor: Ansawina Beheer B.V., 5364 ZJ Escharen (NL)
(72) Inventor: NAS, Matheus, Theodorus, Wilhelmus, NL-5364 PS Escharen (NL)
(74) Representative: Van den Heuvel, Henricus Theodorus
(86) International application number: PCT/NL2003/000388
(87) International publication number: WO 2003/099028

(56) References cited:
- DE-A- 2 737 355
- DE-A- 3 311 437
- GB-A- 2 280 093
- US-A- 3 729 773
- US-A- 4 199 958
- US-B1- 6 266 973
- VEERKAMP C.: "Evaporative air chilling of sub-scald poultry" POULTRY INTERNATIONAL, vol. 20, no. 1, 1981, pages 16-22, XP001086508
- DATABASE FSTA [Online] INTERNATIONAL FOOD INFORMATION SERVICE (IFIS), FRANFURT/MAIN, DE; MATYNIAK J ET AL: "Poultry carcass cooling using air stream and intermittent application of water mist." Database accession no. 79-4-05-s0900 XP002203383 & PRZEMYSL SPOZYWCZY 1978 CENTRALNY OSRODEK BADAWCZO-ROZWOJOWY DROBIARSTWA, POZNAN, POLAND, vol. 32, no. 5, pages 188-190,
- ALLEN V M ET AL: "INVESTIGATION OF HYGIENE ASPECTS DURING AIR CHILLING OF POULTRY CARCASES USING A MODEL RIG" BRITISH POULTRY SCIENCE, LONGMAN GROUP, GB, vol. 5, no. 41, 2000, pages 575-583, XP001086507 ISSN: 0007-1668
- DATABASE WPI Section Ch, Week 198550 Derwent Publications Ltd., London, GB; Class D12, AN 1985-315391 XP002228069 -& SU 1 159 538 A (MEAT IND RES INST), 7 June 1985 (1985-06-07)
- DATABASE WPI Section Ch, Week 198818 Derwent Publications Ltd., London, GB; Class D12, AN 1988-124633 XP002228070 -& SU 1 339 368 A (MEAT IND RES INST), 23 September 1987 (1987-09-23)
- DATABASE WPI Section Ch, Week 199326 Derwent Publications Ltd., London, GB; Class D12, AN 1993-212742 XP002228071 -& SU 1 746 983 A (REFRIG IND RES DES TECHN INST), 15 July 1992 (1992-07-15)
- DATABASE WPI Section Ch, Week 200201 Derwent Publications Ltd., London, GB; Class D12, AN 2002-009000 XP002228072 -& RU 2 174 304 C (UNIV ST PETERSBURG LOW TEMP & FOOD INST), 10 October 2001 (2001-10-10)

## Description

The present invention relates to a method and apparatus for cooling carcasses and carcass parts of slaughtered animals.

After the slaughter of animals the carcasses or parts of the carcasses are cooled in a short space of time to values generally lying below 7°C. For this purpose the objects for cooling (carcasses or carcass parts which have been pre-treated to a greater or lesser extent, including removed organs) are placed in a freezer. The temperature in such a freezer usually lies between -20 and -10°C. After about one to two hours the cooled objects are removed from the freezer and then transferred to a cooling area which has a temperature of a few degrees above 0°C. From the viewpoint of an effective quality control, it is important to bring the carcasses and carcass parts as quickly as possible to a temperature below 7°C. A drawback of the existing method of cooling is that very considerable freezing capacity is required for this purpose (it must be borne in mind here that existing slaughterhouses for large livestock can often process several thousands of animals per hour, wherein the carcasses must be cooled down from a starting temperature of about 40°C ). Research by applicant has also shown that, after the standard period of time in the freezer, the temperature on the outside of the carcass can increase once again to above 7°C in the cooling due to egress of heat enclosed in the core of the carcass (part). A further drawback of the existing method of cooling is that the weight of the carcasses (carcass parts) decreases by several percent during the cooling process.

US 4,199,958 discloses a method and apparatus for cooling carcasses by spraying water onto the carcasses during transport and cooling. The carcasses with moisturized surfaces are carried into a cold air flow (air velocity 5 m/s).

The article "Evaporative Air Chilling Of Sub-scald Poultry" by C. Veerkamp, Poultry International, January 1981, p 16-22, discloses an alternative for cooling poultry by the immersion chilling process. This document discloses a method for cooling carcasses by blowing cold air (6° C average air temperature, air velocity about 1 m/s) onto the carcasses during transport and additionally cooling by evaporation of water supplied onto the carcasses.

US 3,729,773 discloses a method and system for washing and cooling fowl after evisceration by contact with a chilled liquid spray and by contact with a cold gas stream.

The present invention has for its object to provide a method and apparatus for cooling carcasses (and carcass parts) of slaughtered animals in a quicker and more readily controllable manner, with less energy and less weight loss.

The invention provides for this purpose a method for cooling carcasses and carcass parts of slaughtered animals by applying a liquid mist to the object for cooling and carrying the mist-covered object into a gas flow. By applying a liquid mist and then causing the applied liquid to (at least partly) evaporate, a considerable amount of energy is extracted from the object for cooling, which means that the first phase of the cooling route in particular can be speeded up considerably compared to the prior art. A more rapid cooling results in an improved hygienic control (inter alia a limited bacteria growth) of the cooling process and less discolouring of chopped bone parts.

The gas flow preferably has a lower temperature than the object for cooling. It has however been found possible to achieve good cooling results (at least comparable to the cooling results according to the prior art) with a gas flow, the temperature of which at the start of the cooling lies between 15 and 35°C, preferably between 20 and 30°C, such as for instance 25°C. This is very surprising since such a temperature of the gas flow is considerably higher than the temperature of the freezers applied according to the prior art. It will be apparent that this has a significant effect on the energy required for cooling of the carcasses or carcass parts. The present invention therefore enables a very significant reduction in the energy required for cooling. This is extremely advantageous from a commercial and environmental viewpoint. In addition, the cooling installations and processing areas (the freezer area respectively the processing area required according to the present invention) can also take a considerably lighter, simpler and less expensive form. Examples hereof are lighter floors, less insulating material, fewer cooling compressors and so on. Account must also be taken here of the reduction in the capacity for holding carcasses and carcass parts when passage through the cooling route is more rapid. It is expected that a desired cooling result can be obtained within 15 to 18 hours using the method according to the invention. It is further noted that excessively large temperature differences between the carcass (carcass part) for cooling and the gas flow must be avoided. Tests have shown that the advantages of the present invention are hereby partly nullified. The required cooling time thus increases for instance when a colder gas flow (for instance -10°C) is used immediately. Air will normally be used as cooling gas.

Yet another advantage of the present invention deemed particularly relevant is that the carcasses and carcass parts for cooling display considerably less weight reduction (weight loss) during the cooling. A weight reduction of carcasses from the initial weight of about 2%, and up to more than 3.5% in specific conditions, is usual during the first 24 hours of cooling. With the present invention weight reduction can be decreased to anticipated values lying between 0.7 and 1.0% of the initial weight. This is also of great importance commercially.

Owing to the method of cooling according to the invention the quality of the meat is also enhanced. Not placing the carcass (carcass part) in the freezing cold prevents the muscles in the carcass from contracting (thought to be a reaction in particular of the unburnt blood sugars in the case of excessively rapid cooling), which enhances the tenderness of the meat. This can be compared to slaughtering and cooling in traditional manner in atmospheric conditions wherein the meat also remained more tender than in present-day slaughtering techniques. Tests have also shown that the heat is extracted more uniformly from the whole carcass instead of the relatively warm core and a cold outer layer which occur in cooling according to the described prior art. Another advantage of the proposed cooling method is that the colour of the carcass (carcass part) is hereby better preserved than heretofore.

In order to apply the liquid mist to the carcass (carcass part) it is desirable that, during application of the liquid mist to the object for cooling, the object is situated in an environment with a small gas flow. As liquid use can be made of water, for instance softened water. It is however also conceivable for additives to be added to the water or for another liquid to be used for atomizing.

Since the cooling process requires that the atomizing and subsequent placing of the carcass (carcass part) in a gas flow is repeated many times, the objects for cooling can be carried through a plurality of successive compartments substantially separated from each other, in which a similar treatment of the carcass takes place each time. Cooling can thus take place in a continuous product flow, which makes it easier to mechanize the cooling method according to the present invention on a large scale. It is herein found to be advantageous that the objects for cooling are treated in successive cooling phases with gas flows which become increasingly colder.

Favourable results can be achieved using gas flows which lie at the start of cooling between 15 and 35°C, preferably between 20 and 30°C (for instance 25°C) and which decrease to about 0°C at the end of the cooling process. At the start of cooling the speed of the gas flow lies between 5 and 10 m/s (for instance 8 m/s) and may decrease in a later phase of cooling preferably to between 3 and 7 m/s (for instance 5 m/s).

The invention also provides an apparatus for cooling of carcasses and carcass parts of slaughtered animals, comprising: holders for carrying the objects for cooling, mist-generating means and gas flow-generating means whereby the mist-generating means comprise spray nozzles connected to a water supply and the mist is carried to carcasses by means of spraying patterns characterized in that the spray nozzles at lower positions supply mist toward the inside of carcasses. Such an apparatus can be manufactured relatively easily and can connect without great problems onto the transporting systems for carcasses and carcass parts already present in slaughterhouses. The holders can thus be formed by existing spreaders which are displaceable along a guide and from which carcasses and carcass parts can be suspended.

The transport path is preferably enclosed by a housing and the transport route preferably passes through a plurality of cooling compartments substantially separated from each other, so that the local processing conditions can be optimized. The mist-generating means can be realized in simple manner by applying spray nozzles connected to a water supply. Particularly when a liquid supply is combined with blow air (or optionally even compressed air), good results are achieved in practice with atomizing. Another additional advantage of a combination of liquid supply and blow air (compressed air) is that a low-pressure liquid supply can suffice, so that special measures for this purpose become unnecessary; a normal water conduit can suffice. The gas flow-generating means can be formed by fans and preferably comprise a cooling for cooling the gas flow to be generated. For further advantages of the apparatus according to the invention reference is made to the foregoing description of the present method.

It is stated explicitly that the cooling device excluding the holders for carrying the objects for cooling (including the transporting means for such holders) individually also forms part of the present invention.

The invention will be further elucidated on the basis of the non-limitative embodiments shown in the following figures. Herein:
Figure 1 shows a view of a cross-section through a cooling tunnel in which the cooling means according to the present invention are disposed, and
Figure 2 shows a view of a detail of cooling means according to the present invention.

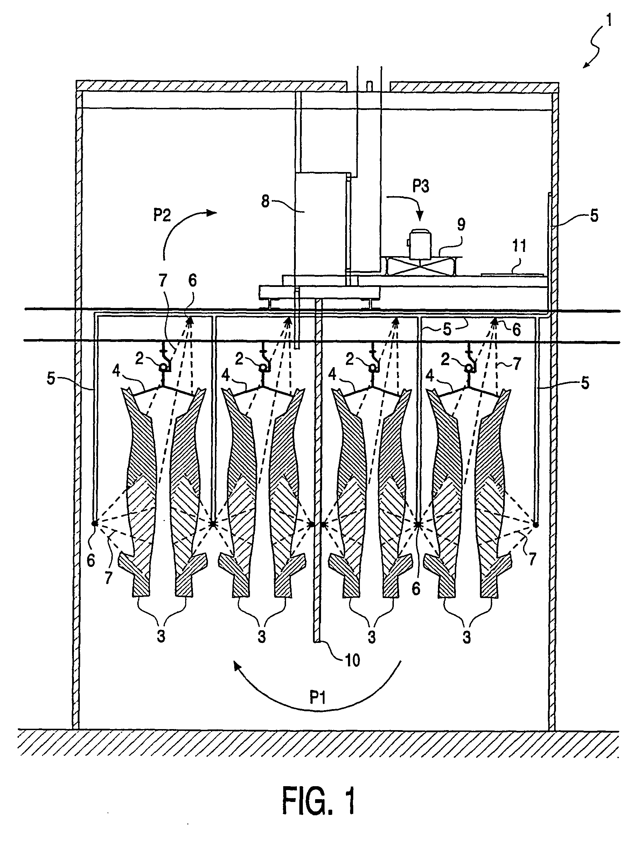

Figure 1 shows a cooling tunnel 1 in which are arranged four parallel guides 2 for carcasses 3 of slaughtered animals. These are here carcasses 3 of pigs but they could also be carcasses of for instance other large livestock such as cattle or poultry. Tunnel 1 can of course also be embodied with a single guide 2 or with other than four guides 2. In order to realize a sufficiently long cooling route, the tunnel will usually have a length of several hundreds of metres and, due to the generally limited availability of space, can be constructed as a winding configuration.

Spreaders 4 are displaceable along guides 2 (by means of transporting chains which are not shown). The carcasses 3 (in this case in opened state) are suspended from spreaders 4. Through a network of pipes 5 liquid is supplied to atomizers (or spray nozzles) 6. The atomized liquid is carried to carcasses 3 by means of spraying patterns 7, shown schematically by broken lines, such that mist is applied to the carcasses on all sides. The atomizers 6 at lower positions make a particular contribution here toward atomizing the inside of carcasses 3.

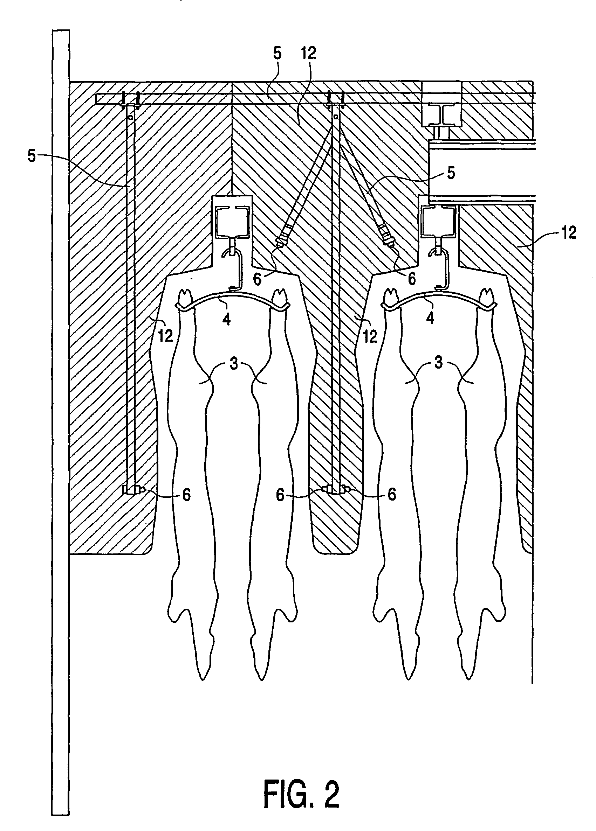

Above guides 2 are disposed cooling means 8 as well as a fan 9 for generating air flow. Although this is not apparent from the view in this figure, it is recommended that cooling means 8 and fan 9 lie at a distance from (in the direction of transport for instance behind) atomizers 6. This is to prevent the mist not reaching carcasses 3 but already being blown away before the mist reaches carcass 3. This will be further discussed with reference to figure 2. It is also noted that groups of atomizers 6 are disposed at a number of locations (in practice usually dozens of positions) in the transporting direction, these atomizers being alternated with cooling means 8 and fans 9 for successively atomizing carcasses 3 and causing the produced mist to evaporate.

For guiding of the gas flow along carcasses 3 a vertical partition 10 is placed between the two middle carcasses 3, so that the gas flow is urged below the partition 10 as according to arrow P1, whereafter the gas flow returns as according to arrow P2 through cooling means 8 to fan 9 (see also arrow P3) for renewed circulation. The heat discharged by means of cooling means 8 can optionally be employed elsewhere for heating purposes.

Adjacently of fan 9 is also arranged a walkway 11 for the purpose of supporting for instance maintenance staff.

The pipe network 5 and atomizers 6 are shown in more detail in figure 2. This figure is appended in particular to show partitions 12 with which more or less mutually separated compartments are created in the transporting direction. The compartments limit the gas flow in the transporting direction, whereby both atomizing and evaporation of the applied mist can take place in more controlled manner. Successive atomizing and gas flow compartments can thus for instance be created, or successive combined compartments in which both atomizing and gas flow take place (in general substantially at a distance from each other).

## Claims

1. Method for cooling carcasses and carcass parts of slaughtered animals by applying a liquid mist to the object for cooling and carrying the mist-covered object into a gas flow,
**characterized in that** the temperature of the gas flow at the start of the cooling lies between 15 and 35°C.

2. Method as claimed in claim 1, **characterized in that** the gas flow has a lower temperature than the object for cooling.

3. Method as claimed in either of the foregoing claims, **characterized in that** during application of the liquid mist to the object for cooling, the object is situated in an environment with a vertical gas flow.

4. Method as claimed in any of the foregoing claims, **characterized in that** the liquid mist is a water mist.

5. Method as claimed in any of the foregoing claims, **characterized in that** the objects for cooling are carried through a plurality of successive compartments separated from each other.

6. Method as claimed in any of the foregoing claims, **characterized in that** after a first cooling by applying mist and gas flow, the objects for cooling are carried in a subsequent cooling phase into a space with a lower temperature than the temperature of the gas flow applied in combination with applying the mist.

7. Method as claimed in any of the foregoing claims, **characterized in that** the temperature of the gas flow at the start of the cooling lies between 20 and 30°C.

8. Method as claimed in any of the foregoing claims, **characterized in that** the speed of the gas flow at the start of the cooling lies between 5 and 10 m/s and that in a later phase of the cooling the speed of the gas flow can decrease.

9. Apparatus for cooling carcasses and carcass parts of slaughtered animals, comprising:
- holders for carrying the objects for cooling,
- mist-generating means, and
- gas flow-generating means,
whereby the mist-generating means comprise spray nozzles connected to a water supply and the mist is carried to carcasses by means of spraying patterns **characterized in that** the spray nozzles at lower positions supply mist toward the inside of carcasses.

10. Apparatus as claimed in claim 9, **characterized in that** the holders are spreaders which are displaceable along a guide and from which carcasses and carcass parts can be suspended.

11. Apparatus as claimed in claim 9 or 10, **characterized in that** the transport path is enclosed by a housing.

12. Apparatus as claimed in any of the claims 9-11, **characterized in that** a transport path for the holders passes through a plurality of cooling compartments separated from each other.

13. Apparatus as claimed in any of the claims 9-12, **characterized in that** the gas flow-generating means comprise fans.

14. Apparatus as claimed in any of the claims 9-13, **characterized in that** the gas flow-generating means comprise a cooling for cooling the gas flow to be generated.

## Patentansprüche

1. Verfahren zum Kühlen von Tierkörpern und Tierkörperteilen geschlachteter Tiere durch Anwendung eines Flüssigkeitsnebels auf dem zu kühlenden Objekt und Befördern des sprühnebelbedeckten Objektes in einen Gasstrom,
**dadurch gekennzeichnet, dass** die Temperatur des Gasstroms zu Beginn der Kühlung zwischen 15 und 35 °C liegt.

2. Verfahren nach Anspruch 1, **dadurch gekennzeichnet, dass** der Gasstrom eine niedrigere Temperatur hat als das zu kühlende Objekt.

3. Verfahren nach einem der vorhergehenden Ansprüche, **dadurch gekennzeichnet, dass** während der Anwendung des Flüssigkeitsnebels auf dem zu kühlenden Objekt, das Objekt sich in einer Umgebung mit einem vertikalen Gasstrom befindet.

4. Verfahren nach einem der vorhergehenden Ansprüche, **dadurch gekennzeichnet, dass** der Flüssigkeitsnebel ein Wassernebel ist.

5. Verfahren nach einem der vorhergehenden Ansprüche, **dadurch gekennzeichnet, dass** die zu kühlenden Objekte durch eine Vielzahl aufeinanderfolgender und voneinander getrennter Abteile befördert werden.

6. Verfahren nach einem der vorhergehenden Ansprüche, **dadurch gekennzeichnet, dass** nach einer ersten Kühlung unter Anwendung von Nebel und einem Gasstrom, die zu kühlenden Objekte in einer nachfolgenden Kühlphase, in einen Raum mit einer niedrigeren Temperatur als der Temperatur des Gasstroms, der zusammen mit dem Nebel angewendet wurde, befördert werden.

7. Verfahren nach einem der vorhergehenden Ansprüche, **dadurch gekennzeichnet, dass** die Temperatur des Gasstroms zu Beginn der Kühlung zwischen 20 und 30 °C liegt.

8. Verfahren nach einem der vorhergehenden Ansprüche, **dadurch gekennzeichnet, dass** die Geschwindigkeit des Gasstroms zu Beginn der Kühlung zwischen 5 und 10 m/s beträgt, und dass in einer späteren Kühlphase die Geschwindigkeit des Gasstroms abnehmen kann.

9. Vorrichtung zum Kühlen von Tierkörpern und Tierkörperteilen geschlachteter Tiere, die umfasst:
- Halter zum Tragen der zu kühlenden Objekte,
- Nebel erzeugende Mittel und
- Gasstrom erzeugende Mittel,
wobei die Nebel erzeugenden Mittel Sprühdüsen umfassen, die mit einem Wasseranschluss verbunden sind, und der Nebel auf Tierkörpern mit Hilfe von Sprühmustern aufgetragen wird, **dadurch gekennzeichnet, dass** die Sprühdüsen in den unteren Positionen Nebel auf die Innenseite der Tierkörper sprühen.

10. Vorrichtung nach Anspruch 9, **dadurch gekennzeichnet, dass** die Halter Spreizer sind, die entlang einer Führung verschiebbar sind, und an welchen die Schlachttierkörper und Schlachttierkörperteile aufgehängt werden können.

11. Vorrichtung nach Anspruch 9 oder 10, **dadurch gekennzeichnet, dass** der Transportpfad von einer Behausung eingeschlossen wird.

12. Vorrichtung nach einem der Ansprüche 9-11, **dadurch gekennzeichnet, dass** ein Transportpfad für die Halter durch eine Vielzahl voneinander abgetrennter Kühlabteilungen geht.

13. Vorrichtung nach einem der Ansprüche 9-12, **dadurch gekennzeichnet, dass** die den Gasstrom erzeugenden Mittel Ventilatoren umfassen.

14. Vorrichtung nach einem der Ansprüche 9-13, **dadurch gekennzeichnet, dass** die Gasstrom erzeugenden Mittel eine Kühlung zum Kühlen des zu erzeugenden Gasstroms umfassen.

## Revendications

1. Procédé pour refroidir des carcasses et des parties de carcasse d'animaux abattus, en appliquant un brouillard de liquide sur l'objet à refroidir et en amenant l'objet couvert de brouillard dans un courant de gaz,
**caractérisé en ce que** la température du courant de gaz au début du refroidissement se situe entre 15 et 35 °C.

2. Procédé selon la revendication 1, **caractérisé en ce que** le courant de gaz a une température plus basse que l'objet à refroidir.

3. Procédé selon l'une quelconque des deux revendications précédentes, **caractérisé en ce que** durant l'application du brouillard de liquide sur l'objet à refroidir, l'objet est situé dans un environnement à courant de gaz vertical.

4. Procédé selon l'une quelconque des revendications précédentes, **caractérisé en ce que** le brouillard de liquide est un brouillard d'eau.

5. Procédé selon l'une quelconque des revendications précédentes, **caractérisé en ce que** les objets à refroidir sont transportés à travers une pluralité de compartiments successifs séparés les uns des autres.

6. Procédé selon l'une quelconque des revendications précédentes, **caractérisé en ce que,** après un premier refroidissement par application d'un brouillard et d'un courant de gaz, les objets à refroidir sont transportés dans une phase de refroidissement suivante dans un espace à une température inférieure à la température du courant de gaz appliqué en association avec l'application du brouillard.

7. Procédé selon l'une quelconque des revendications précédentes, **caractérisé en ce que** la température du courant de gaz au début du refroidissement est située entre 20 et 30 °C.

8. Procédé selon l'une quelconque des revendications précédentes, **caractérisé en ce que** la vitesse du courant de gaz au début du refroidissement se situe entre 5 et 10 m/s et **en ce que**, dans une phase ultérieure du refroidissement, la vitesse du courant de gaz peut décroître.

9. Dispositif pour refroidir des carcasses et des parties de carcasse d'animaux abattus, comprenant :
- des supports pour transporter les objets à refroidir ;
- des moyens de production de brouillard, et
- des moyens de production d'un courant de gaz,
les moyens de production de brouillard comprenant des tuyères de pulvérisation reliées à une alimentation en eau et le brouillard étant amené aux carcasses au moyen de configurations de pulvérisation **caractérisées en ce que** les tuyères de pulvérisation occupant des positions inférieures distribuent le brouillard vers l'intérieur des carcasses.

10. Dispositif selon la revendication 9, **caractérisé en ce que** les supports sont des écarteurs qui sont déplaçables le long d'un guide et auxquels les carcasses et parties de carcasse peuvent être suspendues.

11. Dispositif selon la revendication 9 ou 10, **caractérisé en ce que** le chemin de transport est enfermé dans un carter.

12. Dispositif selon l'une quelconque des revendications 9-11, **caractérisé en ce qu'**un chemin de transport pour les supports passe par une pluralité de compartiments de refroidissement séparés les uns des autres.

13. Dispositif selon l'une quelconque des revendications 9-12, **caractérisé en ce que** les moyens de production d'un courant de gaz comprennent des ventilateurs.

14. Dispositif selon l'une quelconque des revendications 9-13, **caractérisé en ce que** les moyens de production d'un courant de gaz comprennent un refroidissement pour refroidir le courant de gaz à produire.
